# EUROPEAN PATENT APPLICATION

(11) **EP 4 516 413 A1**
(43) Date of publication of application: **05.03.2025**
(21) Application number: 24197119.1
(22) Date of filing: 28.08.2024
(51) Int. Cl.: B05D 3/06, C09D 127/06

(54) **FORMULATION FOR OBTAINING PHOTOCROSSLINKED PLASTISOL AND METHOD FOR OBTAINING PHOTOCROSSLINKING PLASTISOL**

(30) Priority: 31.08.2023 PL 44596823
(71) Applicant: Vita Polymers Poland Sp. z o.o., 56-120 Brzeg Dolny (PL)
(72) Inventor: Karolina, Koszyk, Wroclaw (PL)
(74) Representative: Pawlowska-Bajerska, Justyna

(57) **Abstract**

Invention refers to formulation for processing polyvinyl chloride plastisol by means of a photocrosslinking reaction, that is, for obtaining polyvinyl chloride plastisol and therefrom a PVC plastisol coating on a substrate using UV crosslinking of the surface.

The invention also discloses a method for the photocrosslinking of plastisol. The present invention has a practical utility in manufacturing advertising materials, plastic gaskets, wallpaper, artificial leather, bouncy castles and the like. The composition - formulation for obtaining a photocrosslinked plastisol, according to the present invention, comprises three basic components: PVC - native resin or PVC&AC copolymer or PVC&PVAC copolymer; plasticiser mixture i.e. plasticiser known to contain phosphorus, diisononyl phthalate; photoinitiator: 2,4,6-trimethylbenzoyl diphenylphosphine oxide.

## Description

The present invention relates to formulation for obtaining photocrosslinked plastisol and method of obtaining thereof. Invention refers to formulation for processing polyvinyl chloride plastisol a product of a photocrosslinking reaction, resulting in polyvinyl chloride plastisol and therefrom a PCW plastisol coating on a substrate using UV crosslinking of the surface . The present invention also relates to a method for preparation of formulation and therefore finally photocrosslinking plastisol.

The present invention can be used in manufacturing of advertising material, plastic gaskets, wallpaper, artificial leather, bouncy castles, and the like.

Polyvinyl chloride PCW interchangeably referred to as PVC, is a semi-crystalline homopolymer with a relatively high modulus of elasticity. The use of additives, such as plasticisers, stabilisers, pigments, fillers, lubricants and many special additives such as flame retardants, antimicrobial agents, UV protectants and antistatic agents, is essential for the manufacture of successful flexible PVC products. PVC plastisol is a suspension of emulsion poly(vinyl chloride) in a plasticiser.

Copolymer is a type of polymer whose chains contain two or more types of mers. In contrast to copolymers, polymers containing only one type of mers are often called homopolymers. The main reason for obtaining copolymers is their special physical properties that homopolymers and simple mixtures thereof containing the same mers cannot have. In the present invention, copolymers are called the polymer chain where along to the vinyl chloride mers, the mer units of acrylic or vinyl acetate have been attached.

In the subject of commonly used tests based on the viscosity of the diluted solution, it is determined that PCW resins with a Fikentscher K-Value of approximately 51 to 71 are most commonly used. Plastisol resins are sometimes referred to as dispersion resins or, mainly in Europe, paste resins. Grafted copolymers are another type of resin used in the production of vinyl TPE and unplasticised flexible vinyl products or lightly plasticised flexible PWC with low extract content.

The crystalline microdomains in plasticised PCW, which are distributed between amorphous regions, act similarly to cross-links in rubbers, resisting creep, compression and thermal deformation, except that they are thermally reversible.

Most plastic crystallites melt at processing temperatures and re-form during the cooling of molten plasticised PCW alloys. However, the melting and recrystallisation behaviour is complex, as PCW contains several different types of crystallites that melt and reform at different temperatures. Their melting and reforming depends on the type of plasticiser present. Low-temperature plasticisers, such as dioctyl adipate (DOA), primarily plasticise the amorphous areas of PCW and have little effect on the melting point of the crystallites, thus requiring higher processing temperatures than fast-melting plasticisers or general-purpose plasticisers.

Substrates such as those listed below are known to be used in the production of PCW plastisols.

Primary plasticisers are the main additives responsible for the plasticisation of PWC. They are classified as monomeric plasticisers, polymeric plasticisers, epoxy plasticisers and special flame retardant plasticisers. These are low-volatility liquids whose polarity and other characteristics are such that they are sufficiently compatible with PVC. Secondary plasticisers are low-volatility liquids whose compatibility with PVC is such that they can be used together with primary plasticisers as part of a plasticising system, but which migrate to the surface of the finished product when used as the sole plasticiser.

Chlorinated paraffins are a common example of secondary plasticisers for PCW, used because of their low cost and lower flammability than most of the primary plasticisers.

There are several types of solid plasticisers for PCW, which include compatible nitrile rubbers, compatible polyurethanes, compatible polyesters, ethylene oxide-carbon vinyl acetate terpolymers and some polyacrylates. These solid materials are mainly used in thermoplastic elastomeric PCW (TPE) compounds and specialised PVC materials, some with low flammability and low smoke release.

Epoxy plasticisers have oxirane oxygen groups in their molecules resulting from the epoxidation of olefinic double bonds in their starting raw materials.

Epoxy plasticisers are used as costabilisers along with suitable mixed metal stabilisers and some of the newer types of stabilisers. Epoxidised soybean oil (ESO) and epoxidised linseed oil (ELO) are the most commonly used epoxides.

Other commonly used plasticisers include phosphate ester plasticisers. dipropylene glycol dibenzoate, some of the citrate esters, such as acetyl tri-n-hexyl citrate and butyl tri-n-hexyl citrate.

As for the stabilisers metal mixture stabilisers are also mentioned, e.g.: zinc compounds, mixed fatty acid salts.

Photoinitiators can be classified into first and second types. The first type comprises initiators that undergo photodissociation with the formation of a radical pair as a result of radiation absorption. Initiators of the second type are two-component systems in which an excited photoinitiator molecule reacts with a second, non-excited molecule (called a co-initiator) to give the corresponding radical.

In addition, it was found that photopolymerisation can be promoted by chlorinated aromatic hydrocarbons.

Photopolymerisation can be defined as the formation of a polymer from low molecular weight molecules by exposure to light. This includes direct excitation of double bonds, but also through sensitisation or clarification of photoactive compounds, which is referred to as photoinitiation. Photoinitiated polymerisation is the most common and versatile method, which follows the typical mechanism of free radical or cationic polymerisation. In addition to the initiator, monomers are incorporated into the process, which can crosslink the growing chains and promote the formation of an insoluble, tough polymeric material. This combination of initiator, monomer and crosslinking agent is often referred to as a 'resin'. To fully exploit the potential of the photopolymerisation method, key challenges such as oxygen inhibition, a suitable light source, resin formation, initiator selection and, most importantly, volume shrinkage must be overcome. Turning a liquid into a solid in a matter of seconds creates stresses in the material that would otherwise be dissipated when higher temperatures are applied for longer periods of time, as in conventional thermal polymerisation. Nowadays, photopolymerisation is used in production of adhesives, metal finishes, graphic and decorative coatings, medical devices and even nail finishes, among many other materials.

Also known is a free radical photopolymerisation of plastics - a special form of free radical polymerisation in which light is used to initiate polymerisation. The main limitation of light-induced polymerisation is the limited depth of light penetration, which depends on the wavelength and spectral distribution, but does not exceed a few millimeters. As polymerisation stops when the light source is removed, photopolymerisation techniques are only useful for thin film applications. Photochemical initiation is usually achieved by exposing suitable photoinitiators to UV light. Absorption of light (photons) converts the absorbent molecules (Pls) to their activated form, which rapidly decompose into radicals or ions (I). These particle fragments then initiate polymerisation and/or crosslinking reactions in the next step. In the case of photosensitisers (S), the light-activated molecules (S*) transfer their energy directly to the energy acceptor molecule, which then produces radicals by hydrogen abstraction (II) or photocleavage (III).

The ionic photopolymerisation process is known.

In ionic curing processes, an ionic photoinitiator is used to activate the functional group of the oligomers that will participate in crosslinking. Typically, photopolymerisation is a highly selective process and it is important that polymerisation only occurs where it is desired. To ensure this, the liquid pure oligomer can be doped with anionic or cationic photoinitiators that will only initiate polymerisation when exposed to light radiation. Monomers or functional groups used in cationic photopolymerisation include styrene compounds, vinyl ethers, N-vinylcarbazoles, lactones, lactams, cyclic ethers, cyclic acetals and cyclic siloxanes. Most ionic photoinitiators belong to the cationic class; anionic photoinitiators are much less studied. There are several classes of cationic initiators, including onium salts, organometallic compounds and pyridinium salts. As mentioned earlier, one disadvantage of photoinitiators used for photopolymerisation is that they tend to be absorbed in the short UV region. Photosensitisers or chromophores, which absorb in a much longer wavelength range, can be used to excite photoinitiators by energy transfer. Another modification of this type of system is cationic free radical-assisted polymerisation. In this case, a free radical is formed from another species in solution, which reacts with a photoinitiator to initiate polymerisation. Although there is a diverse group of compounds activated by cationic photoinitiators, the compounds that find the most industrial applications include epoxides, oxetanes and vinyl ethers. One of the advantages of using cationic photopolymerisation is that once polymerisation has started, it is no longer sensitive to oxygen and does not require an inert atmosphere to work well.

A leading processing method for PCW plastisols, involving crosslinking of the product by means of temperature, has been in use for decades. This method involves dissolving the PCW resin in a plasticiser, and reacting the additives. The suggested processing temperature for PVC plastisol is about 180 °C, the processing time depends on the size of the final products and is estimated to be between 3-15min.

The disadvantage of known methods is the high energy cost of PCW plastisol processing plants. As well as the emission of harmful substances into the environment - hydrogen chloride. Given the growing climate problems and the economic and social problems that follow, all industrial solutions and technologies aimed at significantly reducing energy consumption are of particular importance. In addition, rising energy prices in global markets are generating demand for products that reduce the energy costs of industrial production. To date, the processing methods used for PCW plastisol have involved enormous energy costs.

UV technology enables the reduction of energy costs in industrial processes by eliminating the need for high processing temperatures. Additionally, it allows for the optimization of personnel required to carry out individual unit operations on the processing line. Due to the advantages of products made from PCW such as self-extinguishing properties, non-toxicity, resistance to acids, alkalis, alcohols, petrol and mineral oils, high mechanical strength and recyclability, there are still many manufacturers who want to continue working with polyvinyl chloride. Native PCW is not reactive enough to be susceptible to photopolymerisation without changing the ingredients to obtain it.

Photocrosslinking methods - the photopolymerisation methods of PCW plastisol using UV light are known from publications.

EP0275205 discloses a method of manufacturing a composite structure comprising a louvered plastic film, said method comprises the steps of: coating a first main surface of the louvered plastic film with a composition in a liquid state that polymerizes to a transparent, hard state upon exposure to a selected type of radiation, said composition strongly bonding to said louvered plastic film upon polymerization. A further step is to bring the first lining film, which transmits said selected type of radiation into contact with said composition film, said lining film being selected to readily release from said composition upon polymerization of said composition; to expose said composition to sufficient radiation of said selected type to polymerize said composition to a hard state. Thus, a composition is disclosed in the form of a louvered plastic film, in particular a film having increased flexibility. A simplified method for producing a louvered plastic film with a protective coating and a film produced by the method was described. In the method, the louvered plastic film may be coated with a solvent-free composition comprising a mixture of an oligomer, a monomer and a photoinitiator, which polymerizes to an advantageously transparent, hard film upon exposure to a suitable type of radiation. The plastic film is placed on the monomer composition and the monomer composition is then irradiated with polymerizing radiation. Finally, the plastic film is removed, leaving a hard but flexible polymer coating to protect the louvered plastic film. The disadvantage of this solution lies in the necessity to use reactive, harmful, and hazardous monomers.

FR2574684 discloses the process of producing a UV-resistant polyvinyl chloride wear layer from a formulation containing polyvinyl chloride, a crosslinking agent and a photosensitizer. The formulation is applied in the coated state to the substrate, under heat in the first phase and then cross-linked with UV light in the second phase. A PCW wear layer, produced by coating a substrate with a material containing PVC, a crosslinking agent, a photosensitiser and possibly other standard additives, is described, with the formulation being gelled under heat and then cross-linked with UV light. The coating is heated to a temperature at which the coating can gel and then the coating is photopolymerised using UV. The raw materials are first mixed together, then de-aerated, filtered and applied to the substrate to be tested, whereby the coating is first thermally treated and then the surface is cross-linked with UV light. The disadvantages of this solution are the use of high temperatures during the process and the lack of cost reduction associated with the temperature treatment of PVC plastisols.

EP3677347 discloses a method of modifying the surface of a floor covering or wall, comprising at least the steps of: (a) applying a first layer of varnish coating less than 1 mm thick, (b) exposing the varnish to ultraviolet radiation in an LED lamp so that it is pre-crosslinked, (c) exposing the varnish to monochromatic radiation in an inert atmosphere, (d) exposing the varnish to ultraviolet radiation in a UV lamp so that it is fully crosslinked, in particular throughout its thickness. The application of varnishes to given surfaces so as to obtain a matt and fully cross-linked coating is described. The use of several types of LEDs is described, including, for example, LEDs that emit along the spectrum extending between 365 to 420 nm. Non-LED UV lamps are in particular type A mercury vapour lamps, but also lamps doped with so-called iron, lead, gallium (transmitter type, Gallium-Indium). These lamps generally emit along a spectrum extending between 200 nm and 400 nm. The inconvenience of this solution is the multi-step process of irradiating the product to obtain the desired coating.

EP0156002 discloses a thermosetting plastisol dispersion composition comprising at least one acrylonitrile-butadiene-styrene (ABS) copolymer in powder form that is insoluble in a reactive plasticizer at room temperature and plasticizable at or above its melting point, and furthermore, a liquid reactive plasticiser belonging to the group consisting of (a) at least one epoxy resin having on average more than one epoxy group in the molecule, (b) at least one liquid monomer, oligomer or prepolymer characterised in that it contains at least one ethylene unsaturated group and is capable of dissolving ABS at its melting point. Additionally, mixtures (a) and (b); and the effective amount of thermal initiator or photoinitiator for the plasticizers present in the composition are described. The plastisol dispersion after melting can form a thermosetting sealant, coating or adhesive after the crosslinking reaction. The disadvantages of this solution are the use of reactive monomers, oligomers, temperature processing of the product, and the lack of cost reduction associated with temperature processing of the products.

US4929171 discloses a method of applying a polyvinyl chloride composite plastisol coating to a sheet metal, comprising: applying a polyvinyl chloride composite plastisol coating to a sheet, said polyvinyl chloride composite plastisol comprising 100 parts by weight of polyvinyl chloride powder, out of which more than 95 percent by weight comprises particles in the range of 0.5 to 40 um, out of which 20 to 60 percent by weight comprises particles in the range of 0.5 to 5 um, and 35 to 75 per cent by weight consists of particles in the range of 5 to 40 um, 5 to 60 parts by weight of an acrylic monomer, an acrylic oligomer or a mixture thereof, which monomers or oligomers have at least one functional group and at least one initiator or photoinitiator for thermal curing, resulting in a polyvinyl chloride-coated composite sheet. The next step is heating the polyvinyl chloride-coated composite metal sheet at a temperature between 150 and 250°C to obtain a polyvinyl chloride -coated composite sheet. The disadvantages of this solution are the use of reactive monomers, oligomers, temperature processing of the product, and the lack of cost reduction associated with temperature processing of the products.

The disadvantages of the known methods and compositions for PWC plastisols obtained by photocrosslinking with light include the use of reactive, harmful and hazardous monomers, oligomers, multi-step production processes, temperature processing of the product, and the lack of cost reduction associated with temperature processing of the products.

The present invention aimed to develop an energy-saving solution free from the above-mentioned disadvantages, namely a method of processing PVC plastisols that would enable their processing solely using UV light, without the need to use reactive, harmful raw materials or high temperatures.

In the description concerning the invention, PCW and PVC are used interchangeably that means polyvinyl chloride. Copolymers are called substrate - raw material used in the invention - polyvinyl chloride to which acrylic or vinyl acetate group - units is added to the polymer chain. Within chain of copolymer - the one type of polymers there are two or more types of single units - monomers. In contrast, to copolymers, polymers containing only one type of unit and are often called homopolymers. According to the invention, a selected copolymer is used - a copolymer with vinyl acetate or a copolymer with acrylic. According to the invention, the copolymers are polyvinyl chloride with vinyl acetate or acrylic.

The present invention discloses a new mixture - formulation for the processing of polyvinyl chloride PCW plastisol provided to replace the current highly energy-intensive and toxic polyvinyl chloride plastisol by incorporating a unique component of the composition for obtaining cross-linked PCW plastisol, i.e. photoinitiator allowing the photopolymerisation reaction to take place in a given UV range, gelling and melting plasticisers, and a polymer or, in one embodiment of the invention, with other polymers that will not initiate the elimination and formation of a toxic agent HCl gaseous hydrochloride from the PCW polymer or copolymers. The new plastisol composition might be processed in a low temperature process, only by means of UV light, i.e. an ordinary UV or LED lamp. Moreover, due to the change of the plastisol processing from temperature to UV, high temperatures are not reached during the process, therefore cooling of the final product will not be necessary. As a result, the plastisol according to the present invention poses significantly less health risks and is more environmentally friendly.

The plastisol maintains, keeps a long-lasting stable and cream-like viscosity without rapid increase instead of a heavy pseudoplastic viscosity during the storage period.

The composition - formulation for obtaining the photo-crosslinked plastisol according to the present invention comprises three basic components: PCW - PVC native resin - polymer or PCW&AC copolymer or PCW&PVAC compolymer, for example provided by Vestolit or Vinnolit companies, plasticizer mixture i.e. plasticizer known to contain phosphorus, diisononyl phthalate, photoinitiator: 2,4,6-trimethylbenzoyl diphenylphosphine oxide.

These three essential components therefore are:
(a) PCW vinyl chloride polymer resin, which is the native form of PVC, or instead of the native form of PCW another type of PCW is used, called in this description the second PWC copolymer, which may be vinyl acetate PCW&AC or PCW vinyl chloride-acrylic copolymer PCW&PVAC.
(b) Plasticiser mixture: two plasticisers: the first comprising commercially available phosphorus and the second one, which is diisononyl phthalate.
(c) Photoinitiator dedicated to wavelengths from 365nm - 400 nm, preferably up to 395 nm, i.e. compound 2,4,6-trimethylbenzoyl diphenylphosphine oxide .

The ratio of the total weight of the plasticiser mixture to the total weight of the PCW polymer resin or any aforementioned copolymer is preferably 65:100, photoinitiator in the range of 5 to 20 phr (parts hundred resin) to 100 phr PCW resin or copolymer.

The quantitative content of the plasticiser mixture in the formulation is as follows: 35.14 wt% to 38.24 wt% relative to the total a-b-c mixture. The mixture of the two plasticisers, i.e. the first one commercially available phosphorus-containing in an amount of 8.11 wt% to 8.82 wt% relative to the total formulation, and the second one diisononyl phthalate, ranges from 27.03 wt% to 29.41 wt% relative to the total formulation.

The quantitative content by weight of the total PCW polymer or any of the aforementioned copolymers in the formulation is as follows: 54.05 wt% to 58.82 wt% of the total a-b-c mixture.

The quantitative content of the photoinitiator in the formulation is as follows: 2.94 wt% by weight to 10.81 wt% of the total a-b-c mixture.

The quantity, weight of the PCW polymer or the copolymer is selected in terms of the aforementioned amounts for the other components.

The composition for obtaining plastisol and for photocrosslinking the PVC plastisol may further comprise at least one known component selected from the group consisting of the known: wetting agent, dispersing agent, crosslinking agent, filler, blowing agent, rheology modifier, thixotropic agent, lubricant, antistatic agent, thermal stabiliser, pigment, flame retardant, foaming agent, viscosity reducer, dilatancy reducer, and UV absorber.

The layer applied to the final material is cured by exposing the plastisol composition applied to the substrate to UV radiation in the wavelength range: 400 - 365 nm preferably 395 - 365 nm at a temperature of 20°C to 60°C.

The method for obtaining a photocrosslinked PCW plastisol using native PCW and from it a coating applied to any substrate using the aforementioned composition, according to the invention comprises following steps.
a) Obtaining the above-mentioned plastisol composition , which is obtained by mixing the ground photoinitiator, preferably in a milled form in the meaning of rub/dilute, ground form, in an amount of from 2.94 wt% to 10.81 wt% relative to the total formulation, with a phosphorus-containing plasticizer in an amount of from 8.11 wt% to 8.82 wt% relative to the total formulation, at room temperature for a time of about 2 minutes, and then adding a resin of native PCW in an amount of from 54.81 wt% to the total formulation, at room temperature for a time of about 2 minutes, and then a native PCW resin in an amount of from 54.05 wt% to 58.82 wt% relative to the total formulation, is added and mixed for a time of approx. 5 minutes at room temperature. Following, the main plasticiser diisononyl phthalate, is then added to the system in an amount ranging from 27.03 wt% to 29.41 % relative to the total formulation and the total is mixed for about 5 minutes.
(b) Application of the plastisol composition w/w to medium - a substrate where the plastisol paste is to be applied preferably glass or steel or polyester or aluminium.
(c) Exposure of the plastisol composition applied to the substrate to UV light in the wavelength range: 400 - 365 nm preferably 395 - 365 nm at a temperature of 20°C to 60°C for a period of time to cure the composition, preferably 6 seconds to achieve full cross-linking of the surface, preferably 6 seconds to avoid burning and degradation of the surface. Significantly longer crosslinking times, above 1 minute in the case of unground/unmilled photoinitiator and even above 6 seconds, in the case of ground/milled photoinitiator, can cause burn-through and surface degradation. On the other hand, too short a cross-linking time, less than 6 seconds, is not sufficient to obtain a cross-linked and hard coating.

In another embodiment of the method for obtaining a photocrosslinked PCW plastisol according to the present invention, instead of PCW plastisol in resin form another PCW copolymer w/w is used, i.e. PCW vinyl acetate copolymer PCW&AC. The method according to another embodiment comprises the following steps:
a) Obtaining the above-mentioned plastisol composition , which is obtained by mixing the ground photoinitiator, preferably in milled form in the meaning of rub/dilute, ground form in the range of 2.94 wt% to 10.81 wt% relative to the total formulation, with a phosphorus-containing plasticizer in the range of 8.11 wt% to 8.82 wt% relative to the total formulation and at room temperature for a time of about 2 minutes, and then the PCW&AC copolymer resin alone in an amount of from 54.05 wt% to 58.82 wt% relative to the total formulation at room temperature is added and mixed for a time of approx. 5 minutes. The main plasticiser diisononyl phthalate is then added to the system in an amount ranging from 27.03 wt% to 29.41 wt% relative to the total formulation and the total is mixed for a time of approx. 5 minutes.
(b) Application of the plastisol composition to medium - a substrate where the plastisol paste is to be applied preferably glass or steel or polyester or aluminium.
(c) Exposure of the plastisol composition applied to the substrate to UV light in the wavelength range: 400 - 365 nm preferably 395 - 365 nm at a temperature of 20°C to 60°C for a period of time to cure the composition, preferably 6 seconds to achieve full cross-linking of the surface, preferably 6 seconds to avoid burning and degradation of the surface. Significantly longer crosslinking times, above 1 minute in the case of unground/uncrushed photoinitiator and even above 6 seconds, in the case of ground/crushed photoinitiator, can cause burn-through and surface degradation. On the other hand, too short a cross-linking time, less than 6 seconds, is not sufficient to obtain a cross-linked and hard coating.

In another embodiment of the method for obtaining a photocrosslinked PVC plastisol and therefrom a coating applied to any substrate using the above-mentioned composition, instead of the PVC plastisol another above-mentioned copolymer is used, i.e. PVC vinyl acetate copolymer PCW&PVAC. The method according to another embodiment comprises the following steps:
a) Obtaining the aforementioned plastisol composition , which is obtained by mixing the ground photoinitiator, preferably in milled form in the meaning of rub/dilute, ground form in an amount of 2.94 wt% to 10.81 wt% in relation to the total formulation, with a phosphorus-containing plasticizer in an amount of 8.11 wt% to 8.82 wt% in relation to the total formulation and at room temperature for a time of about 2 minutes, and then adding the PCW&PVAC copolymer resin itself in an amount of 54.05 wt% to 58.82 wt% relative to the total formulation at room temperature is added and mixed for a time of approx. 5 minutes. The main plasticiser diisononyl phthalate is then added to the system in an amount ranging from 27.03 wt% to 29.41 wt% relative to the total formulation, and the total is mixed for about 5 minutes.
(b) Application of the plastisol composition w/w to medium - a substrate where the plastisol paste is to be applied preferably glass or steel or polyester or aluminium.
(c) Exposure of the plastisol composition applied to the substrate to UV light in the wavelength range: 400 - 365 nm preferably 395 - 365 nm at a temperature of 20°C do 60°C for a period of time to cure the composition, preferably 6 seconds to achieve full cross-linking of the surface, preferably 6 seconds to avoid burning and degradation of the surface. Significantly longer crosslinking times, above 1 minute in the case of unground/unmilled photoinitiator and even above 6 seconds, in the case of ground/milled photoinitiator, can cause burn-through and surface degradation. On the other hand, too short a cross-linking time of less than 6 seconds is not sufficient to obtain a cross-linked and hard coating.

The methods relates to methods for preparation of formulation and therefore finally preforming photocrosslinking plastisol.

UV technology has the potential to revolutionise the poly(vinyl chloride) processing industry. The invention might be used in production plants which today are energy-intensive, i.e. where the huge industrial lines require high temperatures and long processing times for PCW plastisols, e.g. industrial plants producing wallpaper, artificial leather, PCW flooring.

There is a reduction in the amount of pollutants released into the environment and the amount of unused heat energy created during the temperature processing of PCW plastisols. Production time is reduced, e.g. in the case of the production of bouncy castles, where there are metre-long polyester fabrics covered with a layer of 0.4 mm PCW plastisol, the process time is approx. 9 minutes per 1 m², with UV irradiation, full cross-linking of the product is obtained after the coating has been exposed for 6 seconds.

The advantages, benefits of the project also include a reduction in electricity demand, which serves a low-carbon climate policy. Plasticised PCW is still widely used in many industries, such as wallpaper, automotive, floor coverings, coatings and others. The energy consumption for its processing is so high that taking into account ever-increasing energy costs and pressure to use eco-friendly solutions, it poses a real question for companies about the viability of doing business as usual. UV technology enables significant cost reductions.

From a practical perspective, once the invention has been implemented, manufacturers can reduce the process costs associated with energy costs when processing poly(vinyl chloride) and the costs associated with reducing the number of people required to run the process, compared to the standard production method.

For both, the entrepreneurs and the national economies, this is an opportunity to implement an innovative project, which will allow us to stand out in the international arena. It allows process cost savings to be generated without having to replace the raw material being worked on.

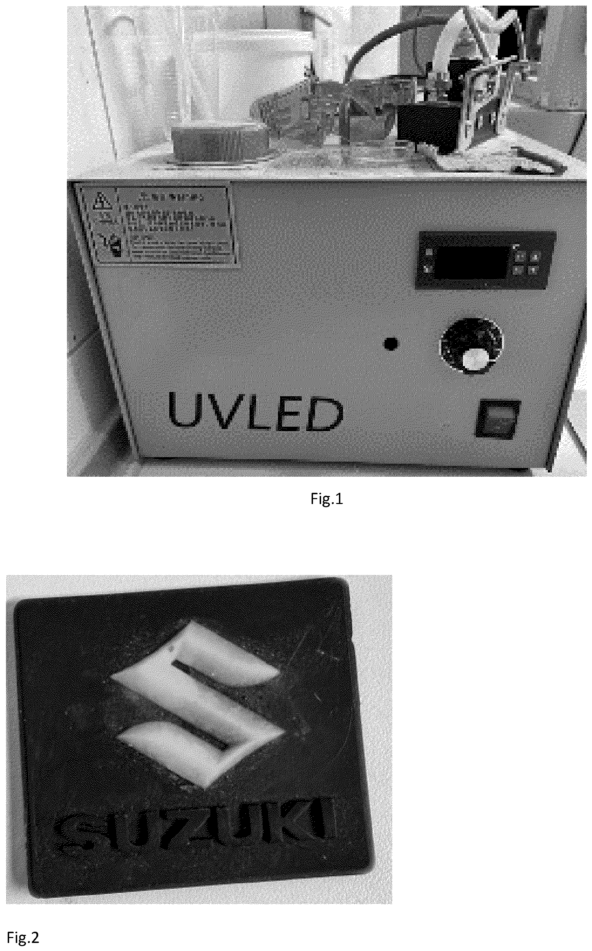

The invention is described in more detail in the examples and in the figures, where Fig. 1 shows the UV lamp used for the test, operating in the wavelength range 400-365 nm - the example describes cross-linking at 395 and 365 nm; Fig. 2 shows the entire advertising element - a patch, which is made of PVC plastisol and processed using UV technology. In the examples, the curing of plastisol under UV light at a given wavelength was confirmed. This resulted in obtaining the patch shown in Fig. 2 patch in each example.

### Examples

### Example 1 - invention research - introduction

### Photocrosslinking method

The product - PCW plastisol - is processed under industrial conditions using electromagnetic radiation in the UV wavelength range: 395 - 365 nm i.e., a commercially available UV lamp. This is a competitive alternative to the current processing method for PCW plastisols, in which the polymer is processed at a temperature of approx. 180°C . Photoinitiators that are reactive in wavelengths of 400 - 365nm were used in the research process.

The effect of individual different reactive photoinitiators in the wavelength range 400 - 365nm was tested with the use of a UV lamp. For this purpose, samples of PCW plastisols were made, based on emulsion native PCW, a phthalate plasticiser, with the addition of individual different photoinitiators dedicated to wavelengths: 365-400 nm preferably up to 395 nm. Based on the study, the most effective photoinitiator was selected, i.e. 2,4,6-trimethylbenzoyl diphenylphosphine oxide.

Plasticisers with epoxidised groups, sebacates, citrates, polymeric plasticisers, with different degrees of polymer chain branching were studied. Each sample was tested for photopolymerisation susceptibility using a UV lamp in the aforementioned wavelength range: preferably 395 - 365 nm. Based on the tests, two effective plasticisers were selected: the first, commercially available phosphorus-containing, and the second, diisononyl phthalate.

The photopolymerisation efficiency of systems on PCW resin, native or PCW copolymer with vinyl acetate or PCW copolymer with acrylic was compared. Regardless of the PCW resin or copolymers selected, the susceptibility to photopolymerisation of the system was the same. From an economic point of view, the use of native PCW resin is suggested.

It was tested whether the introduction of reactive hydroxy or polyhydroxy groups into the native PCW resin product would enable photopolymerisation.

All product samples were tested at different UV irradiance magnitudes, and the time it took for the PCW plastisol to start cross-linking, whether the product cross-links only on the surface or in the bulk, was checked. The products were tested on various substrates such as thin aluminium plates, paper, polyester fabric and aluminium moulds.

In the course of the research, samples of PCW plastisols were prepared in the following mixtures, and quantities, and the samples were tested for susceptibility to photopolymerisation with a UV lamp at 365 nm - 395 nm.

Samples of four photoinitiators were prepared with individual plasticisers: diisononyl phthalate, a phosphorus-containing plasticiser.

PCW resins were then added to the samples with photoinitiators and plasticisers: to the first sample (Table 1) native PVC was added, and to the second sample (Table 2) poly(vinyl chloride) copolymer with acrylic in concentrations ranging from 10 - 40% ACR, to the third sample (Table 3) poly(vinyl chloride) copolymer with vinyl acetate (K-value in the range 60 - 80). The samples, regardless of which type of resin was used, showed the same susceptibility to cross-linking under UV light.

The effect of the grain size of the photoinitiator on its efficiency in the system was tested. In order to obtain a smaller grain size, the photoinitiator was ground on a mortar and plastisol samples were made with ground and unground photoinitiator. The study showed that the photoinitiator with the smaller grain size (crushed) is more effective, which means that less of it can be used and photopolymerisation already occurs after the coating has been exposed for 6 seconds, while with the undiluted photoinitiator, photopolymerisation only occurs after 1 minute. This is how the grinding of the photoinitiator on the cross-linking time was tested.

The photocrosslinking time was adjusted based on the research, according to the present invention. All samples were cross-linked on:
Steel substrate - exposure of plastisol coating for 6 seconds
Glass substrate - exposure of plastisol coating for 6 seconds
Polyester fabric substrate - exposure of the plastisol coating for 6 seconds longer exposure causes burning of the fabric, no adhesion to the polyester fabric
Aluminium substrate - exposure of the plastisol coating for 6 seconds.

The plastisol surfaces were exposed for different times in order to determine the optimal time needed for the product to crosslink using UV light; it was found that a cured PVC plastisol surface was obtained after the coating had been exposed for just 6 seconds. The result of the photocrosslinking reaction was checked by applying a thin layer of PVC plastisol (approx. 1 mm) to a steel, polyester fabric, glass or paper substrate, followed by UV light exposure. The plastisol was exposed at different times: 6 seconds, 10 seconds, 15 seconds, 20 seconds, 40 seconds, 60 seconds. The test showed that irrespective of the substrate, the PVC plastisol surface cured after the coating had been exposed for 6 seconds. In addition, on glass, paper and polyester fabric substrates, cross-linking of the product in the bulk was observed after exposure of the coating for 6 seconds, while on metal substrates it takes approximately 60 seconds for the plastisol to cross-link in the bulk.

### Example 2

Examples of proven formulation recipes according to the invention are given in tables 1-6 - quantitative and qualitative composition of the substrates used in the reaction and in the product.

### PVCUV/23/1 - using own sample name, table 1

| | | | |
|---|---|---|---|
| Diisononyl phthalate | 147,06g | 29.41 wt% of the total formulation | 50 phr |
| Phosphorus-containing plasticiser in this example: Santicizer 141 | 44,12g | 8.82 wt% of the total formulation | 15 phr |
| Native form or PCW resin | 294,12g | 58.82 wt% of the total formulation | 100 phr |
| 2,4,6-trimethylbenzoyl diphenylphosphine oxide | 14,71g | 2.94 wt% of the total formulation | 5 phr |

### PVCUV/23/1A - sample name, Table 2

| | | | |
|---|---|---|---|
| Diisononyl phthalate | 135,14g | 27.03 wt% of the total formulation | 50 phr |
| Phosphorus-containing plasticiser in this example: Santicizer 141 | 40,54g | 8.11 wt% of the total formulation | 15 phr |
| Native form or PCW resin | 270,27g | 54.05 wt% of the total formulation | 100 phr |
| 2,4,6-trimethylbenzoyl diphenylphosphine oxide | 54,05g | 10.81 wt% of the total formulation | 20 phr |

### PVCUV/23/2 - sample name, table 3

| | | | |
|---|---|---|---|
| Diisononyl phthalate | 147,06g | 29.41 wt% of the total formulation | 50 phr |
| Phosphorus-containing plasticiser in this example: Santicizer 141 | 44,12g | 8.82 wt% of the total formulation | 15 phr |
| PCW&AC copolymer | 294,12g | 58.82 wt% of the total formulation | 100 phr |
| 2,4,6-trimethylbenzoyl diphenylphosphine oxide | 14,71g | 2.94 wt% of the total formulation | 5 phr |

### PVCUV/23/2A - sample name, Table 4

| | | | |
|---|---|---|---|
| Diisononyl phthalate | 135,14g | 27.03 wt% of the total formulation | 50 phr |
| Phosphorus-containing plasticiser in this example: Santicizer 141 | 40,54g | 8.11 wt% of the total formulation | 15 phr |
| PCW&AC copolymer | 270,27g | 54.05 wt% of the total formulation | 100 phr |
| 2,4,6-trimethylbenzoyl diphenylphosphine oxide | 54,05g | 10.81 wt% of the total formulation | 20 phr |

### PVCUV/23/3 - sample name, table 5

| | | | |
|---|---|---|---|
| Diisononyl phthalate | 147,06g | 29.41 wt% of the total formulation | 50 phr |
| Phosphorus-containing plasticiser in this example: Santicizer 141 | 44,12g | 8.82 wt% of the total formulation | 15 phr |
| PCW&PVAC copolymer | 294,12g | 58.82 wt% of the total formulation | 100 phr |
| 2,4,6-trimethylbenzoyl diphenylphosphine oxide | 14,71g | 2.94 wt% of the total formulation | 5 phr |

### PVCUV/23/3A - sample name, Table 6

| | | | |
|---|---|---|---|
| Diisononyl phthalate | 135,14g | 27.03 wt% of the total formulation | 50 phr |
| Phosphorus-containing plasticiser in this example: Santicizer 141 | 40,54g | 8.11 wt% of the total formulation | 15 phr |
| PCW&PVAC copolymer | 270,27g | 54.05 wt% of the total formulation | 100 phr |
| 2,4,6-trimethylbenzoyl diphenylphosphine oxide | 54,05g | 10.81 wt% of the total formulation | 20 phr |

### Description of the method of obtaining the embodiment of the invention from Table 1

The method for producing the photocrosslinked PCW plastisol described in Table 1, and for applying a coating to any surface using the aforementioned composition, as per the present invention, involves the following steps:
a) To obtain a plastisol composition, which is obtained by mixing the ground photoinitiator - 2,4,6-trimethylbenzoyl diphenylphosphine oxide - ground as described in Example 1 in the amount given in Table 1 with the phosphorus-containing plasticizer in the amount given in Table 1 at room temperature for a time of about 2 minutes, and then the native form of the PVC polymer in the amount given in Table 1 is added, at room temperature, mixed for a time of 5 minutes. Further, the main plasticiser - diisononyl phthalate in the amount given in Table 1 is added to the system, the whole is mixed for a time of 2 minutes on a mechanical stirrer with a shear mixer tip, speed of 600 rpm. The sample thus prepared is de-aerated in the vacuum chamber until a smooth surface is obtained. After de-aeration, the sample is filtered through a 100 - 700 micron sieve.
(b) Application of the aforementioned plastisol composition on the substrate where the plastisol paste is to be applied, e.g. glass - glass dish or aluminium - Q-Panel QD-2-3.5 tiles (quality parameters for the tiles: smooth, glossy finish; Width: 51 mm; Length: 89 mm; Thickness: 0.51 mm; Q-Panel contains manganese and phosphorus, carbon content up to 0.15%), or milled aluminium moulds , or polyester fabric for the manufacture of bouncy castles.
(c) Exposure of the plastisol composition applied to the substrate to UV light using the UV lamps shown in Fig. 1, in the wavelength range: 395 - 365 nm at 20°C for 6 seconds to cure the composition. Prolonged heating in this example can lead to burn-through and surface degradation.

Methods by which a product intended for UV technology can be identified: exposure to a UV lamp at a given wavelength, FT-IR, Gas Chromatography, Spectrophotometry, NMR, DSC - in this example of the invention was the exposure to a UV lamp at 365 - 395nm.

Similarly, the evaluation of the crosslinking of a layer of the resulting plastisol applied to the same material in this UV wavelength range of 395 - 365 nm at 60°C for 6 seconds to cure the composition was conducted.

The effect of exposure for both temperatures was assessed by touching the surface of the exposed sample. If the surface was cured, it was considered that the technology was working and the results were satisfactory. In addition, the product was checked on the processing line. Fig. 2 shows a photograph of a product made using UV technology, i.e. the advertising element used as a clothing patch shown in Fig. 2. As can be seen in Fig. 2, plastisol cures under UV light at a given wavelength. This resulted in the creation of the patch.

### Example 3

Description of a method according to Table 2.

The method is carried out similarly to the example according to Table 1 using different parameters.

The second method for obtaining the photocross-linked PCW plastisol shown in Table 2 and a coating applied to any substrate using the above-mentioned composition, according to the present invention, involves the following steps:
a) Obtaining the aforementioned plastisol composition, which is obtained by mixing the ground photoinitiator (2,4,6-trimethylbenzoyl diphenylphosphine oxide), grounded as described in Example 1, in the amount shown in Table 2 with a phosphorus-comprising plasticiser in the amount shown in Table 2 at room temperature for 2 minutes, followed by the addition of the native form of the PVC polymer in the amount shown in Table 2, at room temperature, mixed for 5 minutes. Further, the main plasticiser diisononyl phthalate is added to the system in the amount given in Table 2, the whole is mixed for a time of 2 minutes on a mechanical stirrer with a shear mixer tip, with a speed of 600 rpm. The sample thus prepared is de-aerated in the vacuum chamber until smooth. After de-aeration, the sample is filtered through a 100 - 700 micron sieve.
(b) Application of the aforementioned plastisol composition on the substrate where the plastisol paste is to be applied, e.g. glass - glass dish or aluminium - Q-Panel QD-2-3.5 tiles (quality parameters for the tiles: smooth, glossy finish; Width: 51 mm; Length: 89 mm; Thickness: 0.51 mm; Q-Panel contains manganese and phosphorus; Carbon content up to 0.15%), or milled aluminium moulds , or polyester fabric for the manufacture of bouncy castles.
(c) Exposure of the plastisol composition applied to the substrate to UV light using the UV lamps shown in Fig. 1, in the wavelength range: 395 - 365 nm, at a temperature of 20°C for a period of 6 seconds to cure the composition. Prolonged heating can lead to burning and degradation of the surface.

The effect of the exposure was assessed by touching the surface of the exposed sample. If the surface was cured, it was considered that the technology was working and the results were satisfactory. In addition, the product was checked on the processing line. Below is a photo of a product made using UV technology, i.e. an advertising element used as a patch, shown in Fig. 2.

Methods by which a product intended for UV technology can be identified: exposure to a UV lamp at a given wavelength, FT-IR, Gas Chromatography, Spectrophotometry, NMR, DSC - in this example of the invention it was the exposure to a UV lamp with a wavelength of 365 - 395nm.

Similarly, the cross-linking of the thus obtained plastisol layer applied to the same material was assessed in the UV wavelength range of 395 - 365 nm at a temperature of 60°C for 6 seconds to cure the composition.

The irradiation effect for both temperatures was assessed analogously to example 2 (c) for the examples above - for the description according to the table 1.

### Example 4

Description of a method according to Table 3.

The third method for obtaining the photocrosslinked PCW plastisol shown in the Table 3 and a coating applied to any surface using the above-mentioned composition, according to the present invention, comprises the following steps.
A) Obtaining the above-mentioned plastisol composition, which is obtained by mixing the ground photoinitiator (2,4,6-trimethylbenzoyl diphenylphosphine oxide) in an amount given in Table 3 with a phosphorus-containing plasticizer in an amount given in Table 3, at room temperature for 2 minutes, followed by the addition of PVC&AC copolymer in an amount given in Table 3, at room temperature, mixed for 5 minutes. Then the main plasticiser diisononyl phthalate is added to the system in the amount given in the Table 3, the whole mixture is mixed for a time of 2 minutes on a mechanical stirrer with a shear mixer tip, with a speed of 600 rpm. The sample thus prepared is de-aerated in the vacuum chamber until a smooth surface is obtained. After de-aeration, the sample is filtered through a 100 - 700 micron sieve.
(b) Application of the aforementioned plastisol composition on the substrate where the plastisol paste is to be applied, e.g. glass - glass dish or aluminium - Q-Panel QD-2-3.5 tiles (quality parameters for the tiles: smooth, glossy finish; Width: 51 mm; Length: 89 mm; Thickness: 0.51 mm; Q-Panel contains manganese and phosphorus; Carbon content up to 0.15%), or milled aluminium moulds, or polyester fabric for the manufacture of bouncy castles.
(c) Exposure of the plastisol composition applied to the substrate to UV light using the UV lamps shown in Fig. 1, in the wavelength range: 395 - 365 nm at a temperature of 20°C for 6 seconds to cure the composition. Prolonged heating can lead to burning and surface degradation.

The effect of the exposure was assessed by touching the surface of the exposed sample. If the surface was cured, it was considered that the technology was working and the results were satisfactory. In addition, the product was checked on the processing line. Below is a photo of a product made using UV technology, i.e. an advertising element used as a clothing patch, shown in Fig. 2.

Methods by which a product intended for UV technology can be identified: exposure to a UV lamp at a given wavelength, FT-IR, Gas Chromatography, Spectrophotometry, NMR, DSC - in this example of the invention it was the exposure to a UV lamp with a wavelength of 365 - 395nm.

Similarly, the cross-linking of the thus obtained plastisol layer applied to the same material was assessed in the UV wavelength range of 395 - 365 nm at a temperature of 60°C for 6 seconds to cure the composition.

The irradiation effect for both temperatures was assessed analogously to example 2 (c) for the examples above - for the description according to the table 1.

### Example 5

Description of a method according to the Table 4.

A fourth method for obtaining the photocrosslinked PCW plastisol shown in Table 4 and a coating applied to any surface using the above-mentioned composition, according to the present invention, comprises the following steps
A) Obtaining the above-mentioned plastisol composition, which is obtained by mixing the ground photoinitiator (2,4,6-trimethylbenzoyl diphenylphosphine oxide) in an amount given in Table 4 with the phosphate plasticizer in an amount given in Table 4, at room temperature for 2 minutes, then the PCW&AC copolymer in an amount given in Table 4 is added, at room temperature, mixed for 5 minutes. Then the main plasticiser diisononyl phthalate is added to the system in the amount given in Table 4, the whole mixture is mixed for a time of 2 minutes on a mechanical stirrer with a shear mixer tip, with a speed of 600 rpm. The sample thus prepared is de-aerated in the vacuum chamber until a smooth surface is obtained. After de-aeration, the sample is filtered through a 100 - 700 micron sieve.
(b) Application of the aforementioned plastisol composition on the substrate where the plastisol paste is to be applied, e.g. glass - glass dish or aluminium - Q-Panel QD-2-3.5 tiles (quality parameters for the tiles: smooth, glossy finish; Width: 51 mm; Length: 89 mm; Thickness: 0.51 mm; Q-Panel contains manganese and phosphorus; Carbon content up to 0.15%), or milled aluminium moulds, or polyester fabric for the manufacture of bouncy castles.
(c) Exposure of the plastisol composition applied to the substrate to UV light using the UV lamps shown in the Fig. 1, in the wavelength range: 395 - 365 nm at a temperature of 20°C for 6 seconds to cure the composition. Prolonged heating can lead to burning and degradation of the surface.

The effect of the exposure was assessed by touching the surface of the exposed sample. If the surface was cured, it was considered that the technology was working and the results were satisfactory. In addition, the product was checked on the processing line. Below is a photo of a product made using UV technology, i.e. an advertising element used as a clothing patch, shown in Fig. 2.

Methods by which a product intended for UV technology can be identified: exposure to a UV lamp at a given wavelength, FT-IR, Gas Chromatography, Spectrophotometry, NMR, DSC - in this example of the invention it was the exposure to a UV lamp with a wavelength of 365 - 395nm.

Similarly, the cross-linking of the thus obtained plastisol layer applied to the same material was assessed in the UV wavelength range of 395 - 365 nm at a temperature of 60°C for 6 seconds to cure the composition.

The irradiation effect for both temperatures was assessed analogously to example 2 (c) for the examples above - for the description according to table 1.

### Example 6

Description of a method according to the Table 5.

The fifth method for obtaining the photocrosslinked PCW plastisol shown in the Table 5 and a coating applied to any surface using the above-mentioned composition, according to the present invention, comprises the following steps.
A) Obtaining the above-mentioned plastisol composition, which is obtained by mixing the ground photoinitiator (2,4,6-trimethylbenzoyl diphenylphosphine oxide) in the amount given in Table 5 with the phosphate plasticizer in the amount given in Table 5, at room temperature for 2 minutes, followed by the addition of PCW&PVAC copolymer in the amount given in Table 5, at room temperature, mixed for 5 minutes. Then the main plasticiser diisononyl phthalate is added to the system in the amount given in Table 5, the whole mixture is mixed for a time of 2 minutes on a mechanical mixer with a shear mixer tip, with a speed of 600 rpm. The sample thus prepared is de-aerated in the vacuum chamber until a smooth surface is obtained. After de-aeration, the sample is filtered through a 100 - 700 micron sieve.
(b) Application of the aforementioned plastisol composition on the substrate where the plastisol paste is to be applied, e.g. glass - glass dish or aluminium - Q-Panel QD-2-3.5 tiles (quality parameters for the tiles: smooth, glossy finish; Width: 51 mm; Length: 89 mm; Thickness: 0.51 mm; Q-Panel contains manganese and phosphorus; Carbon content up to 0.15%), or milled aluminium moulds, or polyester fabric for the manufacture of bouncy castles.
(c) Exposure of the plastisol composition applied to the substrate to UV light using the UV lamps shown in Fig. 1, in the wavelength range: 395 - 365 nm, at a temperature of 20°C for 6 seconds to cure the composition. Prolonged heating can lead to burning and surface degradation.

The effect of the exposure was assessed by touching the surface of the exposed sample. If the surface was cured, it was considered that the technology was working and the results were satisfactory. In addition, the product was checked on the processing line. Below is a photo of a product made using UV technology, i.e. an advertising element used as a clothing pacth, shown in Fig. 2.

Methods by which a product intended for UV technology can be identified: exposure to a UV lamp at a given wavelength, FT-IR, Gas Chromatography, Spectrophotometry, NMR, DSC - in this example of the invention it was the exposure to a UV lamp with a wavelength of 365 - 395nm.

Similarly, the cross-linking of the thus obtained plastisol layer applied to the same material was assessed in the UV wavelength range of 395 - 365 nm at a temperature of 60°C for 6 seconds to cure the composition.

The irradiation effect for both temperatures was assessed analogously to example 2 (c) for the examples above - for the description according to the table 1.

### Example 7

### Description of a method according to the Table 6.

A sixth method for obtaining the photocross-linked PVC plastisol shown in Table 6 and a coating applied to any surface using the above-mentioned composition, according to the present invention, comprises the following steps.
A) Obtaining the above-mentioned plastisol composition, which is obtained by mixing the ground photoinitiator (2,4,6-trimethylbenzoyl diphenylphosphine oxide) in an amount given in Table 6 with the phosphate plasticizer in an amount given in Table 6, at room temperature for 2 minutes, and then the copolymer PVC&PVAC in an amount given in Table 6 is added, at room temperature, mixed for 5 minutes. Then the main plasticiser diisononyl phthalate is added to the system in the amount given in Table 6, the whole mixture is mixed for a time of 2 minutes on a mechanical mixer with a shear mixer tip, with a speed of 600 rpm. The sample thus prepared is de-aerated in the vacuum chamber until a smooth surface is obtained. After de-aeration, the sample is filtered through a 100 - 700 micron sieve.
(b) Application of the aforementioned plastisol composition on the substrate where the plastisol paste is to be applied, e.g. glass - glass dish or aluminium - Q-Panel QD-2-3.5 tiles (quality parameters for the tiles: smooth, glossy finish; Width: 51 mm; Length: 89 mm; Thickness: 0.51 mm; Q-Panel contains manganese and phosphorus; Carbon content up to 0.15%), or milled aluminium moulds, or polyester fabric for the manufacture of bouncy castles.
(c) Exposure of the plastisol composition applied to the substrate to UV light using the UV lamps shown in Fig. 1, in the wavelength range: 395 - 365 nm at a temperature of 20°C for a period of 6 seconds to cure the composition. Prolonged heating can lead to burning and surface degradation.

The effect of the exposure was assessed by touching the surface of the exposed sample. If the surface was cured, it was considered that the technology was working and the results were satisfactory. In addition, the product was checked on the processing line. Below is a photo of a product made using UV technology, i.e. an advertising element used as a clothing patch, shown in Fig. 2.

Methods by which a product intended for UV technology can be identified: exposure to a UV lamp at a given wavelength, FT-IR, Gas Chromatography, Spectrophotometry, NMR, DSC - in this example of the invention it was the exposure to a UV lamp with a wavelength of 365 - 395nm.

Similarly, the cross-linking of the thus obtained plastisol layer applied to the same material was assessed in the UV wavelength range of 395 - 365 nm at a temperature of 60°C for 6 seconds to cure the composition.

The irradiation effect for both temperatures was assessed analogously to example 2 (c) for the examples above - for the description according to the table 1.

## Claims

1. Formulation for obtaining a photocrosslinked plastisol comprising a vinyl chloride polymer (PVC) and at least one plasticizer, **characterised in that** it comprises a native form of PVC in resin form or copolymer of vinyl acetate PVC&AC or copolymer of vinyl chloride and acrylic PVC&PVAC, plasticizer mixture comprising a phosphorus and a diisononyl phthalate, and additionally photoinitiator in the wavelength range from 365nm to 400 nm, preferably up to 395 nm being a 2,4,6-trimethylbenzoyl diphenylphosphine oxide, wherein the total weight ratio of the plasticisers mixture being from 35.14 wt% to 38.24 wt% of the total formulation, while the quantitative content of the total weight of PVC polymer being from 54.05 wt% to 58.82 wt% of the total formulation and the quantitative content of the photoinitiator being from 2.94 wt% to 10.81 wt% of the formulation.

2. The formulation according to claim 1, wherein the plasticiser comprising phosphorus- is in an amount of 8.11 wt% to 8.82 wt%, calculated over the total formulation and the diisononyl phthalate is in an amount of 27.03 wt% to 29.41 wt%, calculated over the total formulation.

3. The formulation according to claim 1 , wherein the ratio of the total weight of the plasticiser mixture to the total weight of PVC polymer is from about 0.5:1 to about 1:1, the photoinitiator from 5 to 20 phr (parts hundred resin) to 100 phr PVC.

4. Method for obtaining photocrosslinked PVC plastisol using native PVC and therefrom a coating applied to a surface using the described formulation comprising the described below steps.

5. Method for obtaining plastisol formulation for photo-crosslinking, comprising mixing vinyl chloride polymer (PVC) and one or more plasticisers, **characterised in that** the method comprises the step of mixing a photoinitiator in the wavelength range of 365 nm to 400 nm, preferably up to 395 nm being 2,4,6-trimethylbenzoyl diphenylphosphine oxide, preferably in rub form , in an amount of 2.94 wt% to 10.81 wt%, calculated on the total formulation, with a phosphorus-comprising plasticiser in an amount of 8.11 wt% to 8.82 wt%. as a proportion of the total formulation with plasticiser comprises phosphorus in an amount of from 8.11 wt% to 8.82 wt% of the total, followed by the addition of PVC in native form which is a resin or vinyl acetate copolymer PVC&PVAC or vinyl chloride-acrylic copolymer PVC&AC in an amount of from 54.05 wt% to 58.82 wt% by weight of the total formulation and addition of a plasticiser being diisononyl phthalate in an amount ranging from 27.03 wt% to 29.41 wt% by weight of the total formulation and then mix it.

6. The method according to claim 5, wherein the obtained formulation is applied on any kind of medium, preferably such substrate as glass, steel, polyester or aluminium substrate, and exposed to UV radiation in the wavelength range: 400 - 365 nm, preferably 395-365 nm at the temperature from 20 to 60° C degrees for a duration of the curing process.

7. The method according to claims 5-6, wherein the photo-crosslinking of the surface of the plastisol formulation during the curing process is carried out for a time to avoid burning and degradation of the surface in the range of up to about 6 seconds in the case of a milled photoinitiator or up to 1 minute in the case of unground photoinitiator.
